# EUROPEAN PATENT SPECIFICATION

(11) **EP 1 806 250 B1**
(45) Date of publication and mention of the grant of the patent: **04.05.2011**
(21) Application number: 06381001.4
(22) Date of filing: 04.01.2006
(51) Int. Cl.: B60J 7/00

(54) **Concealment device for vehicle roofs with at least one transparent part**
Abdeckungsvorrichtung für mindestens teilweise transparente Fahrzeugdächer
Dispositif d'occultation pour un toit de véhicule avec au moins une partie transparente

(43) Date of publication of application: 11.07.2007
(73) Proprietor: GRUPO ANTOLIN-INGENIERIA, S.A., 09007 Burgos (ES)
(72) Inventor: Cáceres Selgas, Carlos, 47004 Valladolid (ES); Martinez Saldana, Rubén, 09230 San Mamés de Burgos (ES); Sadornil Santamaria, Juan Carlos, 09001 Burgos (ES)
(74) Representative: Capitan Garcia, Maria Nuria

(56) References cited:
- EP-A- 1 449 692
- DE-A1- 10 331 269
- DE-A1- 10 338 722
- DE-A1- 10 360 629
- DE-A1- 19 856 868
- US-B1- 6 481 787

## Description

### PURPOSE OF THE INVENTION

This invention consists of a shading device for vehicle roofs according to the preamble of claim 1, with at least one transparent part that can be opened by a sliding lateral guides. A device of that kind is known from DE 19856868 A.

The purpose of this invention is to provide a shading device consisting of two parts: a first shading part consisting of a resistant structure in the form of a moving cross member and a second, rear shading part. The first shading element is a structural part which at the same time forms the trim for the interior of the vehicle with a suitable design to allow sliding using the same rails as the shading part, with sufficient means for retention and above all to prevent pitching to achieve the suitable coupling and connection with the rear shading element. The first shading element in the form of a moving cross member and the rear shading element are connected with a temporary joint such that they can move together with as a single body or independently to allow them to slide separately.

The possibility of separating them allows the removal of the rear shading part, maintaining the first shading part in its position among the other sun roof parts, or, both elements can be removed, leaving the cabin with one large transparent part which may even be the extension of the windscreen. The second shading part will be able to move in a limited way between the first shading part and its storage location, which is fixed.

The purpose of this invention also includes the means that allow it to operate on diverging guides.

### BACKGROUND TO THE INVENTION

There is a growing trend to include ever-larger transparent elements in vehicles such that the user has the sensation of greater space and greater visibility to the exterior.

However, the presence of a larger transparent part also implies a higher level of solar radiation inside so that is necessary to insert a means of shading that totally or partially covers the area of the transparent part.

There are various means of shading adapted to the geometrical conditions of both the transparent part and of the lateral guides on which it slides to allow it to be opened.

Patent number EP1449692 describes a shading element that allows the movement, adapting itself to the configuration imposed by the use of divergent guides; that is, while they may be parallel in their initial section of movement in the rear part, they separate in their frontal part with greater distances between guides.

The technical solution used to adapt the shading device to these guides consists of the use of a rigid structure consisting of a telescopic transverse frontal bar with others that may be necessary in intermediate sections. These rigid telescopic bars match the different distances between the guides in their movement and maintain rigid a flexible sheet that can be stretched during its extension to match the various configurations.

This configuration has various inconveniences. The first is the practical difficulty of sliding manually since the tension of the elastic sheet in the diverging area causes reaction forces that tend to move the assembly of elements in the device longitudinally. This tendency to sliding either requires braking or during the manual movement an important effort needs to be applied which frequently makes its application unviable.

The second inconvenience is the impossibility of adopting certain degrees of curvature since, because it is an elastic sheet, it tends to adopt the form required by the distribution of tensions and it is never possible to follow a domed form when there is a pronounced double curve.

Patent number DE10331271 describes another shading element consisting of rigid sections fixed to the shading device. These rigid elements are the ones that move along the lateral guides and are telescopic to adapt themselves to divergent guides.

The same invention considers special cases in which the shading element is divided into two parts, one for the right side and the other for the left side; or even more general situations of movement always using telescopic means for the rigid structure of the shading element.

Patent number DE10338722 describes an extending shading element using a rigid frontal cross member which has a support at the end that acts as a rocker that can adapt itself to the diverging line of the guides.

This rocker pivots on a point at its junction with the cross member with two points that slide following the guide. The junction of the cross member with the shading element allows its sliding movement to drag the shading element. If the sun shades are joined to this cross member, the movement of the shading element will necessarily move the sun shades because they move together with the shading element as it is moved.

Patent number DE19856868 is given as an example of the combination of independent shading elements. In this patent, the front shading element does not replace the trim containing elements such as the rear-view mirror or sun shade but retains the usual trim, with fixed installation, separating the roof and the windscreen.

Finally, patent number EP1405745 is mentioned because it defines a moveable sliding support consisting of a bar for sliding the sun shades only. This bar does not replace the trim and is no more than a simple structure that slides independently without in itself forming a shading element. Neither is it limited in its movements by the single shading element it describes but does include the possibility of crossover between both.

The main purpose of this patent is to establish a means of moving the sun shades to the rear part of the vehicle.

### DESCRIPTION OF THE INVENTION

This invention consists of a shading device for vehicle roofs with at least one transparent element consisting of two parts or shading elements, a first shading element called, for the purposes of differentiation, the mobile cross member and which is no more than a rigid frontal structure that allows the trim to support the sun shades among other auxiliary elements; and a second part consisting of the rear shading element which, from this moment on, is called the "shading element" not because it is the only one but because it is closer to what is usually a shading element.

The two bodies can be separated, giving rise to two situations during use: the first in which the mobile cross member and the shading element are joined and act as a single unit, and a second in which they are separated and may be in different positions.

This invention is of great interest for use in large areas such as those formed by a windscreen that extends continuously as a transparent element in the vehicle's roof.

In this configuration, a support is required for the sun shades and this support, although moved towards the rear of the shading element, may also be present in order to house the sun shades and other auxiliary elements normally housed in the trim between the windscreen and the roof.

When with the mobile cross member is joined to the shading element and the entire device is in its forwardmost position, it provides a configuration that is similar to that of a traditional vehicle which at the front has the sun shades together with the other trimmer elements and the roof is open.

The removal of the shading element will also remove the mobile cross member and therefore the sun shades and other auxiliary elements that may be installed on this cross member.

This solution is valid when the entire transparent area is to be made available, both that of the windscreen and that of the transparent extension in the roof. Nevertheless, the front seat occupants may require the sun shade and at the same time may want to remove the shading element.

This invention allows this intermediate situation since, because it is possible to separate the mobile front cross member from the shading element, the former may remain in the front part of the vehicle and the shading element may be withdrawn. Not only are these extreme arrangements possible but any intermediate one is possible too since the movement of one or other body is independent, whether manually or power-operated. In all situations, both extreme and intermediate, the rear shading element is limited in its movement between the rear edge of the transparent elements and the position of the mobile cross member.

The mobile cross member is a structure that replaces the usual fixed trim located between the windscreen and the roof so that it must incorporate the necessary strengthening elements to continue to fulfil both its support function and its shading function due to its area of extension.

Although the invention is able to function by sliding in parallel guides, the mobile cross member is a rigid structure whose side supports can be adapted to the increase in distance and changes in curvature imposed by diverging guides.

This adaptation is possible because its ends include mobile support pieces that can be structural in nature. One of the examples described in detail makes use of pieces that are called from now on triangles.

These triangles are rigid pieces that are partially housed inside the mobile cross member such that they can move in and out within a certain range of distances in a movement that is parallel to the main plane defined by the body of the mobile cross member. These in and out movements occur without the loss of the resistant support capacity offered in the direction perpendicular to the plane in which they can move.

The in and out movement may be complicated to allow the position of the triangle to adapt to the position imposed by the divergent guides. This in and out movement of the triangle is guided using the most general case for following a given curve. This curve sets a movement with an instantaneous centre of rotation that also moves according to its own trajectory causing movements that may even be complicated ones from the kinematic point of view.

In the simplest case in which the curves are segments of a circumference with a common centre, this instantaneous centre of rotation may match the physical axis that structurally reinforces the connection between the triangles and the mobile cross member. In this specific case, the movement of the triangles is simply a rotation around the physical axis.

If this is the connection between the triangle and the mobile cross member, there is another connection between the triangle and the guide that consists of the use of sliding cars and sliders such as those usually used in the movement, for example, of blades for use as the shading element. These auxiliary elements ensure a correct sliding, minimising wear and friction.

The purpose of the invention also includes the use of other structural solutions to cover the additional space caused by the divergence of the guides. These are based on configurations consisting of independent telescopic elements, for example, cylinders guided in housings, which in turn reach the sliders that slide in the guides.

The connection of these telescopic elements with the sliders that slide in the guides may be carried out by one or more points to allow the slider the necessary rotation between the slider and the telescopic elements required by the change of direction caused by the diverging guide.

On the other hand, the shading element consists of a sheet or plate with sufficient area to cover the rest of the transparent element or the transplant elements if there is more than one. It has already been stated that this shading element can be separated from the mobile cross member, for which it has the means for connecting and coupling to that mobile cross member on its front edge.

Given that the shape adopted by the transparent element may be very varied with longitudinal and transfers curvatures that may be pronounced or not, shading elements of flexible, semi-flexible and rigid materials are used.

Flexible materials refers to a sheet that must be kept in tension in order to avoid wrinkling and semi-flexible refers to materials that may have a certain degree of bending, in the longitudinal sense, transverse sense or both, but that may, for example, supports shearing tensions and operating forces.

In each case, the blades or reinforcement elements required by the material used in the main area of the shading element and guides are used and there are also sliders, cars and sliding elements in the guide as well as the traction elements, either manual or powered.

The connection between the mobile cross member and the shading element is made using a anchoring that can be separated from inside the vehicle. The detailed description of the invention describes the practical manufacture of an anchoring that allows the connection simply by applying a force to bring them together and separation facilitated by a manual control that frees the mechanical retention.

### DESCRIPTION OF THE DRAWINGS

This description is complemented with a set of plans illustrating the preferred example and never limiting the invention.
Figure 1 is an exploded view of a first example for manufacturing the invention including the guides and movement motors.
Figure 2 shows a sequence of three phrases of movement of the shading device when the mobile cross member and the shading element are connected and another sequence, shown below the first one, which includes the movement of the shading element with the mobile cross member disconnected and arranged without moving the front part.
Figure 3 shows an exploded view of the shading element according to a manner of manufacturing the invention in which a semi-flexible sheet is used.
Figure 4 shows an exploded view of the shading element according to another manner of manufacturing the invention in which a rigid sheet or plate is used.
Figure 5 shows an exploded view of the mobile cross member according to one manner of manufacturing the invention.
Figure 6 shows a detail of the fixing and support of the lateral triangles of the mobile cross member in the same manner of manufacturing the invention.
Figure 7 shows a second mode of configuring the triangles on the mobile cross member.
Figure 8 shows another method of fixing the freeze to the guide using two support points.
Figure 9 shows a sequence of joining and freeing the mobile cross member and the shading element according to one manner of manufacture.

### EXAMPLES OF MANUFACTURING THE INVENTION

In this detailed description of examples of the invention, use will be made of a descriptive order which starts from the components in an example of manufacturing the invention and then indicates modes for relating each of them together. According to this descriptive order, the elements directly related with the essence of the invention need not be at the start. Equally, the names of the mobile cross member (1) for the shading element given previously that consists of a cross member and the name of the shading element (2) will be retained.

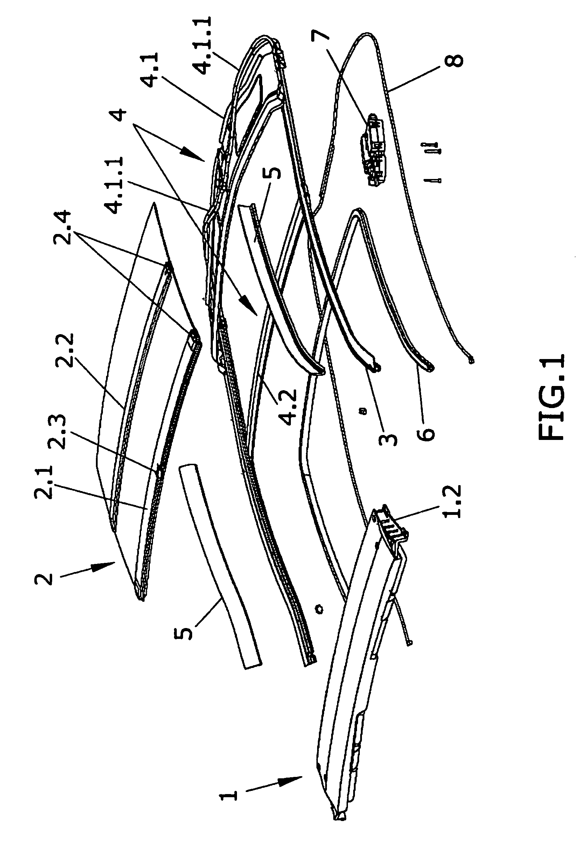

Figure 1 is an exploded view of an example of manufacturing the invention to show which components form the device.

This figure shows the lateral guides (3) connected by cross beams (4), in this case a rear one (4.1) and an intermediate reinforcing one (4.2) forming the support structure on which the device that forms the subject of this invention will slide.

As well as the guides (3), a gasket (6) is shown below as well as a trim (5) above which in this example of manufacturer serves to hide part of the elements of the device, leaving visible only the essential elements.

In this case the invention has a support frame essentially consisting of the guides (3), the rear cross beam (4.1) and the intermediate beam (4.2). The rear beam (4.1) may be metal or injected plastic. In this case it is possible to integrate into the body of the rear cross beam (4.1) both the tubes (4.1.1) that guide the cables (8), the anchoring of these tubes to the motor (7), the motor support (7) and the anchorings for the tubes to the guides (3). In this case the anchorings of the tubes are supported as is done normally, defining channelled sections that alternatively protrude to one side and the other to clamp the tube, also alternatively, using a form that can be injection-moulded. The ends of the tubes that reach the cross beam and other ends are anchored with additional pieces that may also be of plastic.

The mobile cross member (1) and the shading element (2) are shown separated, with one (1) and another (2) means of coupling for use as a single body and both (1, 2) sliding in the same guides (3).

The same figure 1 shows a forward transverse reinforcement (2.1) in the shading element (2) coinciding with the edge that couples with the mobile cross member (1) and a second central reinforcement (2.2) which, if semi-flexible sheets are used, serves to increase the rigidity so that the shading surface better matches the geometrical configuration and curvature of the transparent surface to be covered.

It is in the rear reinforcement (2.1) where the retention means or joint (2.3) with the mobile cross member (1) can be seen that allows the mobile cross member (1) and shading element (2) to slide in the guides as a single body. It is important in this mutual joint that the surfaces that come into contact match. The greatest difficulty in the coupling is the possibility of pitching of the mobile cross member (1). This pitching is mainly prevented by the various aspects of its design; one is its width, understood as the distance or average measurement between the front and rear parts with respect to the vehicle, and another important one is the use of lateral guiding means, on one side and the other, which have at least two support points or one continuous support. The combined action of these technical properties allows the position of stability in pitch to be guaranteed.

This sliding is possible thanks to the manual movement of the device, or by a motorised movement. In the example shown in Figure 1, a motor (7) is used, joined to the rear cross beam (4.1) from which the drive cables (8) reach either the mobile cross member (1) or the shading element (2). This motorised movement may act on one or the other together or independently since when both elements (1, 2) are separate, the shading element (2), for example, can be moved while the mobile cross member (1) remains braked on the front part so that, for example, the front passengers have a sun shade (1.1).

This same Figure 1 shows on one end of the mobile cross member (1) a triangle (1.2) that serves as a support and that can adapt to the diverging guides (3). This element is described below with the help of the figures.

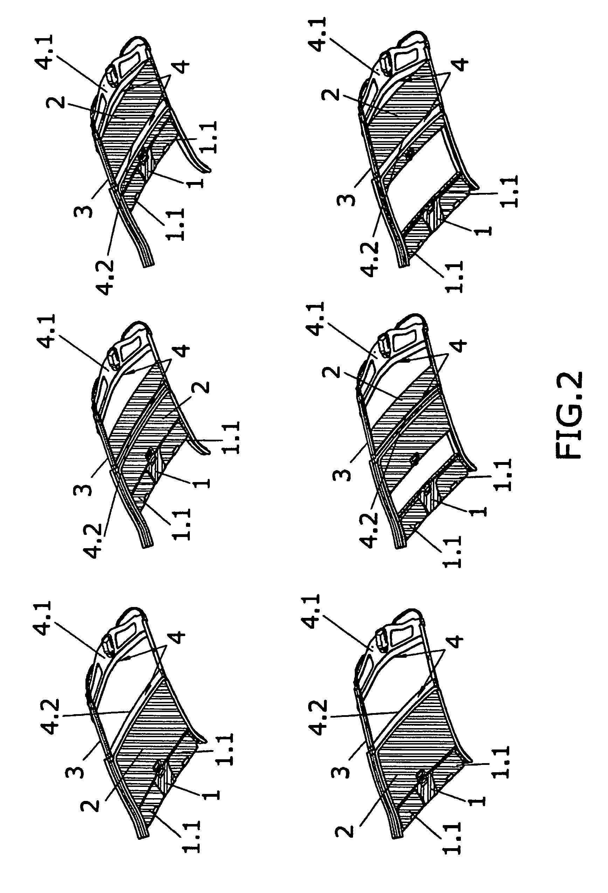

Figure 2 shows a sequence of the movement of the device that forms the subject of this invention showing some of the possibilities for movement.

The upper row of figures shows the mobile cross member (1) and the shading element (2) joined such that during the sliding they move as a single body. When the shading element (2) is withdrawn, the mobile cross member (1) with the sun shades (1.1) also moves towards the rear part.

The lower row of figures shows the mobile cross member (1) separated from the shading element (2). In this case, it is possible to keep the mobile cross member (1) in the front part of the area to be hidden with its sun shades (1.1) arranged for use and the shading element (2) is moved separately to its rearmost storage position, limited by the presence of the rear cross beam (4.1).

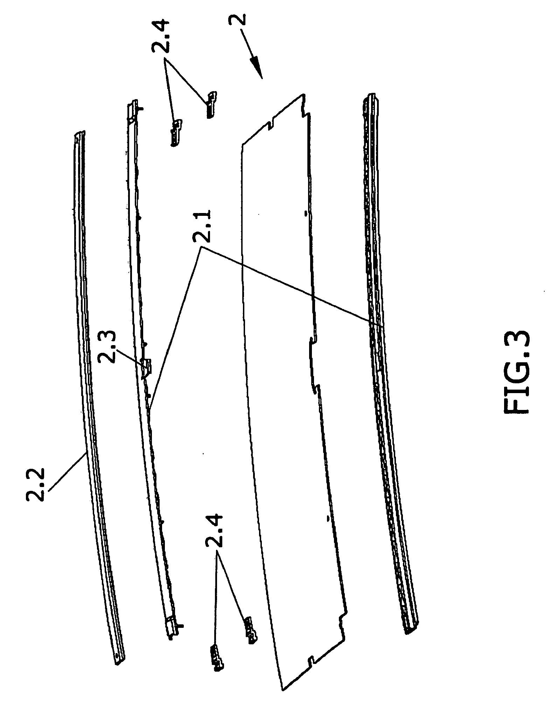

Figure 3 shows an example of the shading element (2) in an exploded view to provide a better view of one of its components.

This view shows the shading element (2) in which the main sheet is semi-flexible because it admits bending around the main longitudinal and transverse axes but, for example, it cannot be rolled up and does not allow shearing forces.

Two pieces are joined above and below this sheet to provide reinforcement (2.1) to the front edge. In this example of manufacturing the invention, two pieces are used to give greater rigidity while it is possible to hide the reinforcement ribs of each piece behind the coupling in its final position. Nevertheless, it is also possible to use a single piece which (2.1) has the coupling means (2.3) to form the joint or connection with the mobile cross member (1). In Figure 3, one of the reinforcements (2.1), the upper one, has a means of connection (2.3) in the form of a hook which engages in the corresponding hole in the mobile cross member (1). This hook (2.3) may be located in any of the reinforcement pieces (2.1). The details of the joint are given below.

Also shown are the transverse reinforcement (2.2) and the sliders (2.4) that couple both the transverse reinforcement (2.2) and the reinforcement (2.1) on the front edge so that the assembly slides in the guide (3) of the shading device.

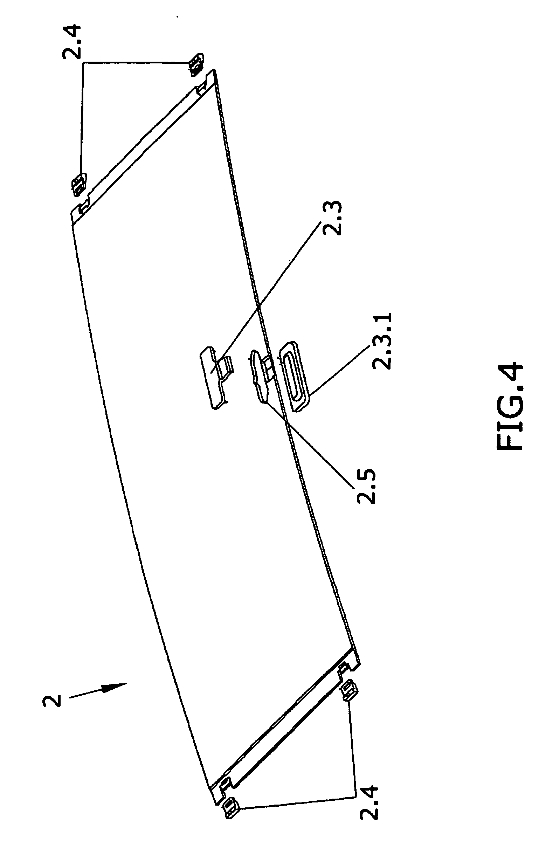

When the rigidity of the shading element (2) is increased, it is possible, as shown in Figure 4, to do away with the rigidity and reinforcement elements (2.1, 2.2) used in the above example.

In the example shown in Figure 4, it is possible that the sliders (2.4) are fixed directly to the shading element (2) since there are no transverse reinforcements.

At the front, also in this example, the joining or connecting means (2.3) with the mobile cross member (1) are housed in a perforation (2.5) in the shading element (2). These means for connecting (2.3) include the handle (2.3.1) or mechanism that moves the sliding of the shading element (2) along the guides (3).

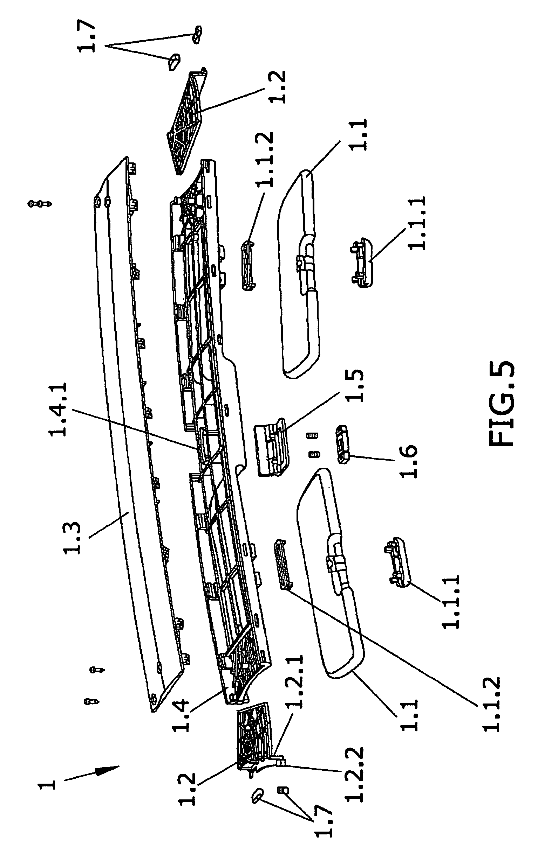

Figure 5 also shows an exploded view of an example of the manufacturer of the mobile cross member (1). In this example, the main body consists of the two semi-covers, one semi-cover (1.3) above and one semi-cover (1.4) below, both joined, for example, using bolts and clips.

The main flat body of the triangles (1.2) is trapped between these semi-covers (1.3, 1.4) allowing the mobile cross member (1) to adapt to the distance and divergence imposed by the guides (3).

This triangle (1.2) has the above mentioned main flat body reinforced by a group of ribs, plus a stepped extension (1.2.1) in an arch that ends in a support bar (1.2.2).

The stepped extension (1.2.1) allows the mobile cross member (1) to assume a higher position than that which would be imposed by the triangle (1.2) if it was contained entirely in a plane.

The sliders (1.7) that slide in the guide (3) are anchored on the support bar (1.2.2).

The various modes of kinematic dependency between the triangle (1.2) and the mobile cross member (1) are described below.

In this example, the sun shades (1.1) are located under the mobile cross member (1) where their joint with the mobile cross member (1) uses trims (1.1.2) finished with second trims (1.1.1) to complete the closure of the finished joint of the sun shades (1.1). In another possible manufacturing example, the sun shades (1.1) may be disposed of so that by extending the guides (3) at their front ends, the front shading element or mobile cross member (1) carries out the function of the sun shades (1.1).

It can be seen that there is a slot (1.4.1) in the lower semi-cover (1.4) in the centre of the mobile cross member (1). This is the location of the connection with the shading element (2) and the push button (1.6). Figure 5 shows the push button (1.6) together with the trim (1.5). The push button (1.6) in this preferred form of manufacture in which the mobile cross member (1) moves under power and the shading element (2) is mobile and manual, this push button serves only to free the shading element (2). As described already, the description of a method of providing the joint or connection between the mobile cross member (1) and the shading element (2) is given below with the help of a suitable cross section.

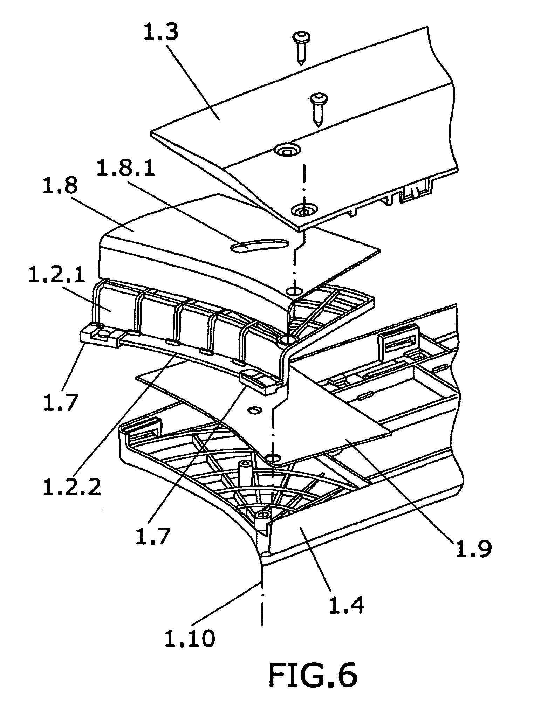

Figure 6 shows a method of providing a joint between a triangle (1.2) and the main body of the mobile cross member (1) with additional pieces compared to the solution shown in Figure 5.

In this configuration, various parts are enclosed between the upper semi-cover (1.3) and the lower semi-cover (1.4) that are involved in the relative movement between the triangle (1.2) and the mobile cross member (1).

This relative movement in this example is caused by a shaft located at the geometrical axis (1.10) shown as a dashed line. Above the triangle (1.2) there is an upper cover (1.8) and a lower cover (1.9), both in a material that facilitates fiction due to its low frictional coefficient and high resistance to fiction. Thus, it is the triangle (1.2) that offers sufficient resistance and support capacity in a set of reinforcement ribs.

The upper cover (1.8) contains a slot (1.8.1) that ensures the guidance in points away from the axis (1.10) of rotation. However, this slot (1.8.1) may be present also when the mobile cross member (1) requires a reinforcement, for example, using an intermediate bolt, such that the above-mentioned slot (1.8.1) allows the passage of the bolt without preventing the rotation of the triangle (1.2). This slot (1.8.1) has the form of an arch because this is the relative movement of the triangle (1.2) with respect to its fixed axis (10) of rotation.

A more general case may be considered consisting of various slots in the form of a specific curve that allows a more complicated relative movement between the triangle (1.2) and the mobile cross member (1). In this other case, the instantaneous centre of rotation need not be a fixed point requiring the presence of a mechanical axis but this instantaneous centre of rotation may also move. In this last case, the presence of a physical axis is not possible.

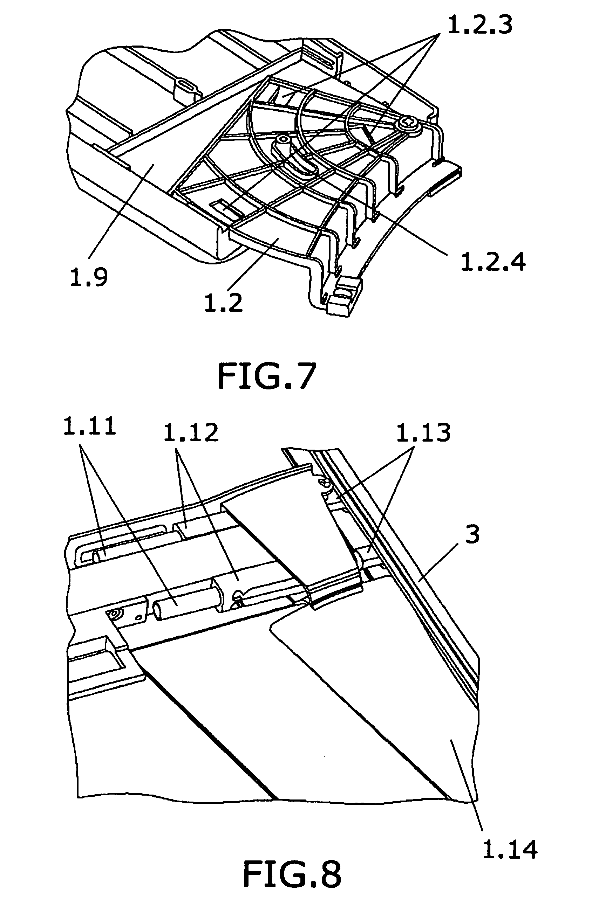

The sliding between the triangle (1.2) and the upper and lower pieces that delimit it, for example, the upper (1.8) and lower (1.9) covers, may be facilitated and improved by incorporating support sliders (1.2.3) as shown in Figure 7. These suport sliders (1.2.3) are integrated into the triangle (1.2) itself as springs that provide pressure on the adjacent surface and thus prevent free play that could cause noise and malfunctioning.

In this same Figure 7, the form of joining the triangles (1.2) to the mobile cross member (1) is different to the previous examples since there is a triangle (1.2) between the two covers (1.8, 1.9) that presses mainly against the lower one (1.9) as shown in the detailed cross section, and the slot (1.2.4) is in the triangle itself (1.2).

In this figure 7, the upper cover (1.8) is not shown; in order to shows suitably the details the view of the end of the mobile cross member (1), the pieces on the triangle (1.2) have been removed since they would otherwise cover it.

The triangles (1.2) need not be the only way of connecting a rigid mobile cross member (1) and the guide (3); sliding cylinders in bushes could be used, like those shown in Figure 8. In Figure 8 there are two cylinders (1.11) guided in a housing (1.12) so that they can only move longitudinally, in and out, independently. Sliders (1.13) are fixed at their ends which join with the guide (3) as was the case with the triangle (1.2) in the previous examples with their sliders (1.7). These sliders (1.13) therefore connect at two points to each cylinder (1.11) which in turn have independent slides giving their sliders (1.7) the degree of freedom necessary to adapt to the guide (3).

Although when the triangles (1.2) emerge they cover the additional space between the mobile cross member (1) and the guide (3), in this case an additional piece (1.14) must be included to cover the space. The additional piece (1.14) moves according to the cylinders (1.11) such that as it protrudes due to the increasing distance generated by the divergence of the guides (3), this triangle (1.2) opens to cover that space.

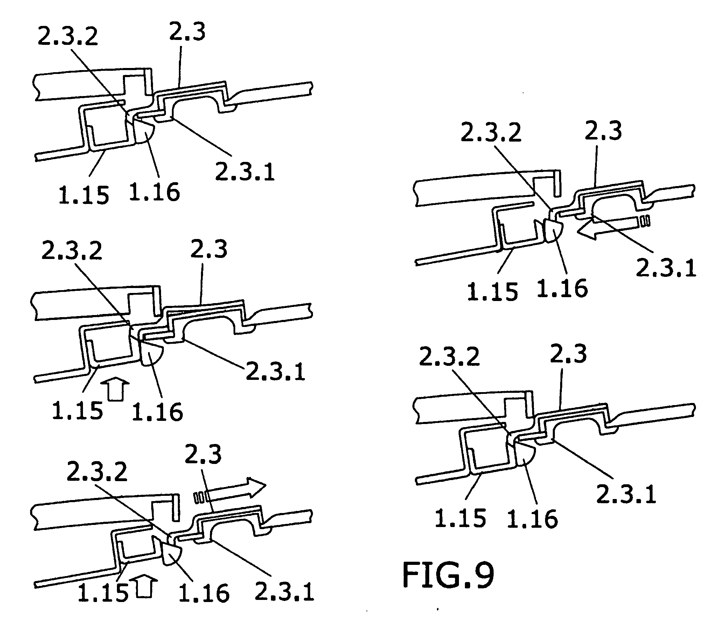

Figure 9 is a detail of the joint that provides a temporary connection between the mobile cross member (1) and the shading element (2). It is described as temporary because it may be joined or separated depending on whether the user wishes them to remain coupled together or not.

In this example of how the mobile cross member (1) and the shading element (2) can be joined, use is made of a clip coupling that may be unhooked by pressing on the push button (1.15).

Figure 9 shows two columns of figures. The right column shows the process of clipping and the left shows how they are separated.

Describing first the clipping process according to the figures in the right hand column, it can be seen that the shading element (2) has one end (2.3.2) in the form of a hook on the main body (2.3) which is flexible. In this manufacturing example, the handle (2.3.1) is located underneath the body (2.3) to allow the shading element to a pushed manually towards the mobile cross member (1).

When the shading element (2) reaches the mobile cross member (1) it does so via the end (2.3.2) in the shape of a hook, coming up against a stop (1.16) with an oblique flat surface. This oblique surface causes the end (2.3.2) to slide over it, flexing thanks to the flexibility of the main body (2.3) to overcome it and engage behind it (1.16).

When the end (2.3.2) is anchored behind the stop (1.16), this end remains located on the operating push-button (1.15).

The group of figures in the left-hand column shows how pressing the push button (1.15) forces the fixing end (2.3.2) by bending so that it realigns with the oblique surface of the stop (1.16) freeing it thanks to the movement caused by the wedge support of the push button (1.15) and the end (2.3.2).

Once the stop (1.16) is freed, the shading element (2) is freed and therefore liberated from the mobile cross member (1).

The means of connection between the mobile cross member (1) and the shading element described by clipping may be different, such as rotating studs, one or other form of interlocking, without these different solutions affecting the essence of the invention.

Regardless of whether the mobile cross member (1) and the shading element (2) are connected on not, both have means for blocking to fix the position with respect to the guides, either manually or motorised.

## Claims

1. Concealment device for vehicle roofs with at least one transparent element, the device consisting of a concealment element located in the front of the vehicle consisting of at least one mobile cross member (1) and a second concealment element (2) which complements the first one (1) to hide all of the transparent element in the roof, such that both concealment elements can be separated, whereby both concealment elements (1, 2) slide on the same guides (3) and whereby the mobile cross member (1):
- has lateral guiding means on both sides,
- is stable by itself, both statically and dynamically, thanks to the combined action of its width and of the lateral guiding means,
- has a position which is always forward with respect to the position of the second concealment element (2),
- has a retention capacity with its own or external means of blocking,
whereby the second concealment element (2):
- has a storage means in the rear part of the roof,
- this storage means being fixed,
the concealment device being **characterised in that**
both concealment elements (1, 2) may be moved independently or together along the roof of the vehicle,
**in that** the lateral guiding means are connected to the guides either through two support points or one continuous support,
**in that** the mobile cross member (1) is an essentially rigid structure supporting sun shades (1.1) among other auxiliary elements and defines, when mounted to the vehicle and placed in its forward-most position, the area where the windscreen goes over into the roof,
and **in that**, when the connection between both concealment elements (1, 2) is freed the second (2) may be moved independently from the front element (1) between it (1) and the rear edge of the transparent element.

2. Concealment device for vehicle roofs with a transparent element as in claim 1 in which the guides (3) are parallel.

3. Concealment device for vehicle roofs with a transparent element as in claim 1 in which the guides (3) are divergent.

4. Concealment device for vehicle roofs with a transparent element as in claim 3 in which the mobile cross member (1) has means at its ends that allow the filling of the additional space created by the divergence of the lateral guides (3).

5. Concealment device for vehicle roofs with a transparent element as in claim 4 in which the means that allow the filling of the additional space caused by the divergence of the lateral guides (3) consists of configurations of a structural type.

6. Concealment device for vehicle roofs with a transparent element as in claim 5 in which the elements that form the structural configurations that cover the additional space caused by the divergence move in the form of a curve.

7. Concealment device for vehicle roofs with a transparent element as in claim 6 in which the elements that form the structural configurations that cover the additional space caused by the divergence move by rotation.

8. Concealment device for vehicle roofs with a transparent element as in claim 7 in which the elements that form the structural configurations that cover the additional space caused by the divergence are triangles (1.2) with a rotation axis (1.10).

9. Concealment device for vehicle roofs with a transparent element as in claim 8 in which the triangles (1.2) have covers (1.8, 1.9) to improve friction and reduce rubbing, below, above or both simultaneously.

10. Concealment device for vehicle roofs with a transparent element as in claim 8 in which the triangles (1.2) have guide slots (1.2.4).

11. Concealment device for vehicle roofs with a transparent element as in claim 8 in which the triangles (1.2) have support bars (1.2 0.3) that act as springs to facilitate the rotation.

12. Concealment device for vehicle roofs with a transparent element as in claim 8 in which the triangles (1.2) have bars (1.7) for sliding along the lateral guides (3).

13. Concealment device for vehicle roofs with a transparent element as in claim 5 in which the structural configurations that cover the additional space caused by the divergence move due to the movement of independent elements (1.11).

14. Concealment device for vehicle roofs with a transparent element as in claim 13 in which the movement of each of the structural configurations is carried out by two cylinders (1.11) guided in a housing (1.12) in a telescopic configuration which also has a piece (1.14) that is essentially triangular connected with the bars (1.13) to cover the additional space caused by the divergence of the guides (3) in which these bars (1.13) have two support points, one for each cylinder (1.11).

15. Concealment device for vehicle roofs with a transparent element as in claim 13 in which the movement of each of the structural configurations is carried out by at least one cylinder (1.11) guided in a housing (1.12) in a telescopic configuration in which there is also a piece (1.14) that is essentially triangular connected with the bars (1.13) to cover the additional space caused by the divergence of the guides (3) in which these bars (1.13) have a single point of support, that of the cylinder.

16. Concealment device for vehicle roofs with a transparent element as in claim 1 in which the second concealment element is rigid.

17. Concealment device for vehicle roofs with a transparent element as in claim 1 in which the concealment element is semi-flexible, allowing longitudinal and transverse bending but not shearing or rolling up.

18. Concealment device for vehicle roofs with a transparent element as in claim 1 in which the second concealment element is flexible, allowing it to be rolled up.

19. Concealment device for vehicle roofs with a transparent element as in claim 18 in which the second concealment element is a flexible panel or curtain that may optionally be fitted with pockets to hold the sheets reinforcement elements (2.1, 2.2).

20. Concealment device for vehicle roofs with a transparent element as in claim 1 in which there are means of joining temporarily the mobile cross member (1) and the second concealment element (2), the means being clips.

21. Concealment device for vehicle roofs with a transparent element as in claim 1 in which the mechanism to move the mobile cross member (1) and the second concealment element is manual.

22. Concealment device for vehicle roofs with a transparent element as in claim 1 in which the mechanism to move the mobile cross member (1) and the second concealment element (2) is motorised.

23. Concealment device for vehicle roofs with a transparent element as in claim 22 in which the motorised mechanism is independent for the mobile cross member (1) and for the second concealment element (2).

24. Concealment device for vehicle roofs with a transparent element as in claim 1 in which the mobile cross member (1) and the second concealment element (2) have means of blocking to fix the position with respect to the guides (3), these blocking means being either a manual or a motorised mechanism.

25. Concealment device for vehicle roofs with a transparent element as in claim 1 in which there is a support frame.

26. Concealment device for vehicle roofs with a transparent element as in claim 25 in which the support frame is made of plastic made in one piece or in various assembled pieces.

27. Concealment device for vehicle roofs with a transparent element as in claim 26 in which the support frame is formed by guides (3), rear cross beam (4.1) and another intermediate beam (4.2).

28. Concealment device for vehicle roofs with a transparent element as in claim 27 in which the rear cross beam (4.1) is of metal.

29. Concealment device for vehicle roofs with a transparent element as in claim 27 in which the rear cross beam (4.1) is of plastic and in which the cable guide tubes and motor support (7) can be integrated.

30. Concealment device for vehicle roofs with a transparent element as in claim 1 in which the mobile cross member (1) is motorised and the second concealment element (2) is moved manually.

31. Concealment device for vehicle roofs with a transparent element as in claim 1 in which the guides (3) are extended at their front edges so that the first concealment element formed as a mobile cross member (1) also forms the sun shade.

## Patentansprüche

1. Beschattungsvorrichtung für Fahrzeugdächer mit mindestens einem transparenten Element, bestehend aus einem Beschattungselement an der Vorderseite des Fahrzeugs, das wiederum ein bewegliches Querteil (1) und ein zweites Beschattungselement (2) umfasst, welches das erste Teil (1) ergänzt und alle transparenten Elemente auf dem Dach abdeckt, wobei diese beiden Beschattungselemente (1, 2) sich trennen lassen und auf den gleichen Führungen (3) gleiten und für das bewegliche Querteil (1) Folgendes gilt:
- es besitzt Führungsvorrichtungen an beiden Seiten,
- dank der gemeinsamen Funktion seiner Breite und der seitlichen Führungsvorrichtungen ist es statisch und dynamisch stabil,
- seine Position ist bezüglich der Position des zweiten Beschattungselements (2) immer nach vom gerichtet und
- aufgrund seiner eigenen oder einer externen Blockiervorrichtungen besitzt es eine Rückhaltekapazität,
wobei des Weiteren für das zweite Beschattungselement (2) Folgendes gilt:
- es besitzt eine Verstauungsvorrichtung am hinteren Dachabschnitt,
- diese Verstauungsvorrichtung ist fest angebracht,
wobei sich die Beschattungsvorrichtung außerdem **dadurch** auszeichnet,
dass beide Beschattungsvorrichtungen (1,2) sich voneinander unabhängig oder gemeinsam entlang des Fahrzeugdaches bewegen lassen,
dass die seitlichen Führungsvorrichtungen über zwei Stützstellen oder eine fortlaufende Stütze mit den Führungen verbunden sind,
dass das bewegliche Querteil (1) eine im Wesentlichen starre Struktur ist, die neben anderen Hilfselementen Sonnenschirme (1.1) festhält und in der am Fahrzeug montierten, am weitesten vom liegenden Position den Übergangsbereich von der Windschutzscheibe zum Dach bestimmt, und
dass bei Lösen der Verbindung beider Beschattungselemente (1,2) das zweite Element (2) freigegeben wird und sich unabhängig vom Frontelement (1) zwischen Letzterem (1) und der Hinterkante des transparenten Elements bewegen kann.

2. Beschattungsvorrichtung für Fahrzeugdächer mit einem transparenten Element nach Anspruch 1, in der die Führungen (3) parallel sind.

3. Beschattungsvorrichtung für Fahrzeugdächer mit einem transparenten Element nach Anspruch 1, in der die Führungen (3) divergieren (auseinander laufen).

4. Beschattungsvorrichtung für Fahrzeugdächer mit einem transparenten Element nach Anspruch 3, in der das bewegliche Querteil (1) an seinen Enden über Vorrichtungen verfügt, die das Ausfüllen des zusätzlich durch das Auseinanderlaufen der Führungen (3) entstandenen Raumes gestatten.

5. Beschattungsvorrichtung für Fahrzeugdächer mit einem transparenten Element nach Anspruch 4, in der die Vorrichtungen zum Ausfüllen des zusätzlich durch das Auseinanderlaufen der Führungen (3) entstandenen Raumes Strukturanordnungen sind.

6. Beschattungsvorrichtung für Fahrzeugdächer mit einem transparenten Element nach Anspruch 5, in der die Elemente der Strukturanordnungen, die den zusätzlichen, durch das Auseinanderlaufen entstehenden Raum abdecken, sich in Kurvenform bewegen.

7. Beschattungsvorrichtung für Fahrzeugdächer mit einem transparenten Element nach Anspruch 6, in der die Elemente der Strukturanordnungen, die den zusätzlichen, durch das Auseinanderlaufen entstehenden Raum abdecken, sich drehend bewegen.

8. Beschattungsvorrichtung für Fahrzeugdächer mit einem transparenten Element nach Anspruch 7, in der die Elemente der Strukturanordnungen, die den zusätzlichen, durch das Auseinanderlaufen entstehenden Raum abdecken, Dreiecke (1.2) mit einer Drehachse (1.10) sind.

9. Beschattungsvorrichtung für Fahrzeugdächer mit einem transparenten Element nach Anspruch 8, in der die Dreiecke (1.2) zur Reibungsverbesserung und zur Verminderung des Scheuerns unten, oben oder gleichzeitig unten und oben abgedeckt sind.

10. Beschattungsvorrichtung für Fahrzeugdächer mit einem transparenten Element nach Anspruch 8, in der die Dreiecke (1.2) mit Führungsschlitzen (1.2.4) ausgestattet sind.

11. Beschattungsvorrichtung für Fahrzeugdächer mit einem transparenten Element nach Anspruch 8, in der die Dreiecke (1.2) Stützstangen (1.2 0.3) besitzen, die als Federn agieren und damit die Drehung ermöglichen.

12. Beschattungsvorrichtung für Fahrzeugdächer mit einem transparenten Element nach Anspruch 8, in der die Dreiecke (1.2) Stangen (1.7) besitzen, mit deren Hilfe sie entlang der seitlichen Führungen (3) gleiten.

13. Beschattungsvorrichtung für Fahrzeugdächer mit einem transparenten Element nach Anspruch 5, in der die Strukturanordnungen, die den zusätzlichen, durch das Auseinanderlaufen entstehenden Raum abdecken, sich mittels Bewegung der unabhängigen Elemente (1.11) bewegen.

14. Beschattungsvorrichtung für Fahrzeugdächer mit einem transparenten Element nach Anspruch 13, in der die Bewegung jeder Strukturanordnung von zwei Zylindern (1.11) vorgenommen wird, die in einem Gehäuse (1.12) untergebracht sind und deren herausziehbare Anordnung auch ein im Wesentlichen dreieckiges und mit den Stangen (1.13) verbundenes Teil (1.14) umfasst, das den zusätzlichen, durch das Auseinanderlaufen der Führungen (3) entstehenden Raum abdeckt, wobei diese Stangen (1.13) zwei Stützstellen besitzen, nämlich eine für jeden Zylinder (1.11).

15. Beschattungsvorrichtung für Fahrzeugdächer mit einem transparenten. Element nach Anspruch 13, in der die von jeder Strukturanordnung ausgeführte Bewegung von mindestens einem Zylinder (1.11) vorgenommen wird, der in einem Gehäuse (1.12) untergebracht ist und dessen herausziehbare Anordnung auch ein im Wesentlichen dreieckiges und mit den Stangen (1.13) verbundenes Teil (1.14) umfasst, das den zusätzlichen, durch das Auseinanderlaufen der Führungen (3) entstehenden Raum abdeckt, wobei diese Stangen (1.13) eine einzige Stützstelle besitzen, nämlich jene des Zylinders.

16. Beschattungsvorrichtung für Fahrzeugdächer mit einem transparenten Element nach Anspruch 1, in der das zweite Beschattungselement (2) steif ist.

17. Beschattungsvorrichtung für Fahrzeugdächer mit einem transparenten Element nach Anspruch 1, in der das zweite Beschattungselement (2) teilweise flexibel ist und die Biegung in Längs- und Querrichtung erlaubt, aber keine Scherung und kein Aufrollen.

18. Beschattungsvorrichtung für Fahrzeugdächer mit einem transparenten Element nach Anspruch 1, in der das zweite Beschattungselement (2) flexibel ist und sich aufrollen lässt.

19. Beschattungsvorrichtung für Fahrzeugdächer mit einem transparenten Element nach Anspruch 18, in der das zweite Beschattungselement (2) eine flexible Platte oder ein flexibler Vorhang ist, die/der sich auf Wunsch mit Taschen ausstatten lässt, welche die Verstärkungselemente (2.1, 2.2) der Blätter halten.

20. Beschattungsvorrichtung für Fahrzeugdächer mit einem transparenten Element nach Anspruch 1 und mit Vorrichtungen zur vorübergehenden Verbindung des beweglichen Querteils (1) mit dem zweiten Beschattungselement (2), wobei diese Vorrichtungen Klemmen sind.

21. Beschattungsvorrichtung für Fahrzeugdächer mit einem transparenten Element nach Anspruch 1, in der ein manueller Mechanismus das bewegliche Querteil (1) und das zweite Beschattungselement (2) bewegt.

22. Beschattungsvorrichtung für Fahrzeugdächer mit einem transparenten Element nach Anspruch 1, in welcher ein motorgetriebener Mechanismus das bewegliche Querteil (1) und das zweite Beschattungselement (2) bewegt.

23. Beschattungsvorrichtung für Fahrzeugdächer mit einem transparenten Element nach Anspruch 22, wobei der motorisierte Mechanismus das bewegliche Querteil (1) und das zweite Beschattungselement (2) voneinander unabhängig bewegt.

24. Beschattungsvorrichtung für Fahrzeugdächer mit einem transparenten Element nach Anspruch 1, in der eine Blockiervorrichtung das bewegliche Querteil (1) und das zweite Beschattungselement (2) in festen Positionen bezüglich der Führungen (3) hält, wobei diese Blockiervorrichtung manuell oder motorgetrieben sein kann.

25. Beschattungsvorrichtung für Fahrzeugdächer mit einem transparenten Element nach Anspruch 1 und einem Stützrahmen.

26. Beschattungsvorrichtung für Fahrzeugdächer mit einem transparenten Element nach Anspruch 25, wobei der Stützrahmen aus einem Kunststoffteil oder aus mehreren zusammengefügten Kunststoffteilen gefertigt ist.

27. Beschattungsvorrichtung für Fahrzeugdächer mit einem transparenten Element nach Anspruch 26, wobei der Stützrahmen aus Führungen (3), einem hinteren Querbalken (4.1) und einem weiteren Zwischenbalken (4.2) besteht.

28. Beschattungsvorrichtung für Fahrzeugdächer mit einem transparenten Element nach Anspruch 27, in welcher der hintere Querbalken (4.1) aus Metall besteht.

29. Beschattungsvorrichtung für Fahrzeugdächer mit einem transparenten Element nach Anspruch 27, in welcher der hintere Querbalken (4.1) aus Kunststoff besteht und die Kabelführungsrohre und die Motorhalterung (7) sich integrieren lassen.

30. Beschattungsvorrichtung für Fahrzeugdächer mit einem transparenten Element nach Anspruch 1, in der das bewegliche Querteil (1) motorgetrieben ist, das zweite Beschattungselement (2) aber manuell bewegt wird.

31. Beschattungsvorrichtung für Fahrzeugdächer mit einem transparenten Element nach Anspruch 1, in der die Führungen an ihren Vorderkanten derart verlängert sind, dass das erste, als bewegliches Querteil (1) geformte Beschattungselement ebenso einen Sonnenschirme bildet.

## Revendications

1. Dispositif d'occultation pour toits de véhicule avec au moins un élément transparent, le dispositif consistant en un élément d'occultation situé dans la partie avant du véhicule consistant en au moins une traverse mobile (1) et un deuxième élément d'occultation (2) qui complémente la première (1) pour cacher tout l'élément transparent dans le toit, de manière que les deux éléments d'occultation puissent être séparés, ce qui fait que les deux éléments d'occultation (1, 2) glissent sur les mêmes guides (3) et ainsi la traverse mobile (1):
- possède des moyens latéraux de guidage des deux côtés,
- est stable en soi, aussi bien statiquement que dynamiquement, grâce à l'action combinée de sa largeur et des moyens latéraux de guidage,
- possède une position qui est toujours avancée par rapport à la position du deuxième élément d'occultation (2),
- possède une capacité de retenue avec ses propres moyens ou des moyens externes de verrouillage,
ce qui fait que le deuxième élément d'occultation (2) :
- possède un moyen de stockage sur la partie arrière du toit,
- ce moyen de stockage étant fixe,
le dispositif d'occultation étant **caractérisé en ce que** les deux éléments d'occultation (1, 2) peuvent se déplacer indépendamment ou ensemble le long du toit du véhicule,
**en ce que** les moyens latéraux de guidage sont reliés aux guides, soit par le biais de deux points de support ou par le biais d'un support continu,
**en ce que** la traverse (1) est une structure essentiellement rigide qui supporte des pare-soleil (1.1) parmi d'autres éléments auxiliaires et définit, lorsqu'elle est montée sur le véhicule et placée dans sa position la plus avancée, la zone où le pare-brise chevauche le toit,
et **en ce que**, lorsque la connexion entre les deux éléments d'occultation (1, 2) est libérée, le deuxième (2) peut se déplacer indépendamment de l'élément avant (1) entre celui-ci (1) et le bord arrière de l'élément transparent.

2. Dispositif d'occultation pour toits de véhicule avec un élément transparent selon la revendication 1 dans lequel les guides (3) sont parallèles.

3. Dispositif d'occultation pour toits de véhicule avec un élément transparent selon la revendication 1 dans lequel les guides (3) sont divergents.

4. Dispositif d'occultation pour toits de véhicule avec un élément transparent selon la revendication 3 dans lequel la traverse mobile (1) possède des moyens à ses extrémités qui permettent le remplissage de l'espace supplémentaire créé par la divergence des guides latéraux (3).

5. Dispositif d'occultation pour toits de véhicule avec un élément transparent selon la revendication 4 dans lequel les moyens qui permettent le remplissage de l'espace supplémentaire causé par la divergence des guides latéraux (3) consistent en des configurations d'un type structurel.

6. Dispositif d'occultation pour toits de véhicule avec un élément transparent selon la revendication 5 dans lequel les éléments qui forment les configurations structurelles qui recouvrent l'espace supplémentaire causé par la divergence se déplacent sous la forme d'une courbe.

7. Dispositif d'occultation pour toits de véhicule avec un élément transparent selon la revendication 6 dans lequel les éléments qui forment les configurations structurelles qui recouvrent l'espace supplémentaire causé par la divergence se déplacent par rotation.

8. Dispositif d'occultation pour toits de véhicule avec un élément transparent selon la revendication 7 dans lequel les éléments qui forment les configurations structurelles qui recouvrent l'espace supplémentaire causé par la divergence sont des triangles (1.2) avec un axe de rotation (1.10).

9. Dispositif d'occultation pour toits de véhicule avec un élément transparent selon la revendication 8 dans lequel les triangles (1.2) possèdent des couvercles (1.8, 1.9) pour améliorer la friction et réduire le frottement au-dessous, au-dessus ou les deux à la fois.

10. Dispositif d'occultation pour toits de véhicule avec un élément transparent selon la revendication 8 dans lequel les triangles (1.2) possèdent des rainures de guidage (1.2.4).

11. Dispositif d'occultation pour toits de véhicule avec un élément transparent selon la revendication 8 dans lequel les triangles (1.2) possèdent des barres de support (1.2, 0,3) qui agissent comme des ressorts pour faciliter la rotation.

12. Dispositif d'occultation pour toits de véhicule avec un élément transparent selon la revendication 8 dans lequel les triangles (1.2) possèdent des barres (1.7) pour glisser le long des guides latéraux (3).

13. Dispositif d'occultation pour toits de véhicule avec un élément transparent selon la revendication 5 dans lequel les configurations structurelles qui recouvrent l'espace supplémentaire causé par la divergence se déplacent grâce au mouvement d'éléments indépendants (1.11).

14. Dispositif d'occultation pour toits de véhicule avec un élément transparent selon la revendication 13 dans lequel le mouvement de chacune des configurations structurelles est mis en oeuvre par deux cylindres (1.11) guidés dans un logement (1.12) sous une configuration télescopique qui possède également une pièce (1.14) qui est essentiellement triangulaire reliée aux barres (1.13) pour recouvrir l'espace supplémentaire causé par la divergence des guides (3) dans lequel ces barres (1.13) possèdent deux points de support, un pour chaque cylindre (1.11).

15. Dispositif d'occultation pour toits de véhicule avec un élément transparent selon la revendication 13 dans lequel le mouvement de chacune des configurations structurelles est mis en oeuvre par au moins un cylindre (1.11) guidé dans un logement (1.12) sous une configuration télescopique dans laquelle il y a également une pièce (1.14) qui est essentiellement triangulaire reliée aux barres (1.13) pour recouvrir l'espace supplémentaire causé par la divergence des guides (3) dans lequel ces barres (1.13) possèdent un seul point de support, celui du cylindre.

16. Dispositif d'occultation pour toits de véhicule avec un élément transparent selon la revendication 1 dans lequel le deuxième élément d'occultation est rigide.

17. Dispositif d'occultation pour toits de véhicule avec un élément transparent selon la revendication 1 dans lequel le deuxième élément d'occultation est semi-flexible, en permettant le pliage longitudinal et transversal, mais non pas le cisaillement ou l'enroulement.

18. Dispositif d'occultation pour toits de véhicule avec un élément transparent selon la revendication 1 dans lequel le deuxième élément d'occultation est flexible, en lui permettant de s'enrouler.

19. Dispositif d'occultation pour toits de véhicule avec un élément transparent selon la revendication 18 dans lequel le deuxième élément d'occultation est un panneau ou rideau flexible qui peut optionnellement être pourvu de poches pour contenir les éléments de renfort de feuilles (2.1, 2.2).

20. Dispositif d'occultation pour toits de véhicule avec un élément transparent selon la revendication 1 dans lequel il y a des moyens d'union temporelle de la traverse mobile (1) et du deuxième élément d'occultation (2), ces moyens étant des agrafes.

21. Dispositif d'occultation pour toits de véhicule avec un élément transparent selon la revendication 1 dans lequel le mécanisme pour déplacer la traverse mobile (1) et le deuxième élément d'occultation est manuel.

22. Dispositif d'occultation pour toits de véhicule avec un élément transparent selon la revendication 1 dans lequel le mécanisme pour déplacer la traverse mobile (1) et le deuxième élément d'occultation (2) est motorisé.

23. Dispositif d'occultation pour toits de véhicule avec un élément transparent selon la revendication 22 dans lequel le mécanisme motorisé est indépendant pour la traverse mobile (1) et pour le deuxième élément d'occultation (2).

24. Dispositif d'occultation pour toits de véhicule avec un élément transparent selon la revendication 1 dans lequel la traverse mobile (1) et le deuxième élément d'occultation (2) possèdent des moyens de verrouillage pour fixer la position par rapport aux guides (3), ces éléments de verrouillage étant soit un mécanisme manuel, soit un mécanisme motorisé.

25. Dispositif d'occultation pour toits de véhicule avec un élément transparent selon la revendication 1 dans lequel il y a un châssis de support.

26. Dispositif d'occultation pour toits de véhicule avec un élément transparent selon la revendication 25 dans lequel le châssis de support est fait en matière plastique en une seule pièce ou en plusieurs pièces assemblées.

27. Dispositif d'occultation pour toits de véhicule avec un élément transparent selon la revendication 26 dans lequel le châssis de support est formé de guides (3), une traverse arrière (4.1) et une autre traverse intermédiaire (4.2).

28. Dispositif d'occultation pour toits de véhicule avec un élément transparent selon la revendication 27 dans lequel la traverse arrière (4.1) est en métal.

29. Dispositif d'occultation pour toits de véhicule avec un élément transparent selon la revendication 27 dans lequel la traverse arrière (4.1) est en matière plastique et dans lequel peuvent être intégrés les tubes de guidage de câbles et le support de moteur (7).

30. Dispositif d'occultation pour toits de véhicule avec un élément transparent selon la revendication 1 dans lequel la traverse mobile (1) est motorisée et le deuxième élément d'occultation (2) est déplacé manuellement.

31. Dispositif d'occultation pour toits de véhicule avec un élément transparent selon la revendication 1 dans lequel les guides (3) s'étendent sur leurs bords avant de manière que le premier élément d'occultation formé comme une traverse mobile (1) forme également le pare-soleil.
